# EUROPEAN PATENT SPECIFICATION

(11) **EP 1 699 878 B1**
(45) Date of publication and mention of the grant of the patent: **24.03.2010**
(21) Application number: 04815414.0
(22) Date of filing: 24.12.2004
(51) Int. Cl.: C08L 101/00, C08K 5/3435, C08K 5/34, C08L 23/08

(54) **CROSSLINKABLE, EXPANDABLE POLYMERIC COMPOSITIONS**
VERNETZBARE, EXPANDIERBARE POLYMERZUSAMMENSETZUNGEN
COMPOSITIONS POLYMERES RETICULABLES EXTENSIBLES

(30) Priority: 24.12.2003 US 532491 P; 05.11.2004 US 625252 P
(43) Date of publication of application: 13.09.2006
(73) Proprietor: DOW GLOBAL TECHNOLOGIES INC., Midland MI 48674 (US)
(72) Inventor: CHEUNG, Yunwa, W., Lake Jackson, TX 77566 (US); HAHN, Stephen, F., Lake Jackson, TX 77566 (US); LIANG, Wenbin, Sugar Land, TX 77479 (US); PRIETO GOUBERT, Miguel, A., CH-8805 Richterswil (CH); WU, Shaofu, Sugar Land, TX 77479 (US)
(74) Representative: Hayes, Adrian Chetwynd
(86) International application number: PCT/US2004/043335
(87) International publication number: WO 2005/066279

(56) References cited:
- EP-A- 1 264 857
- US-A1- 2003 166 795

## Description

### FIELD OF THE INVENTION

This invention relates to expandable polymeric compositions that undergo free radical crosslinking reactions.

### DESCRIPTION OF THE PRIOR ART

A number of expandable polymers can undergo free radical reactions. Some of those reactions are beneficial such as crosslinking at the desired crosslinking temperature while others are detrimental such as premature crosslinking or degrading. There is a need to promote the beneficial crosslinking reaction while minimizing the impact of the detrimental reactions.

EP-A-1,264,857 describes a curable composition which comprises the following two components:
(A) a vinyl polymer (i) having at least one crosslinking functional group, and
(B) heavy or ground calcium carbonate (ii) having a specific surface area of not smaller than 1.5 m²/g but not larger than 50 m²/g.

US-A-5,723,554 describes a process for producing a styrenic polymer having a weight average molecular weight of 200,000 to 500,000, a number average molecular weight of 100,000 to 450,000 and a molecular weight distribution of from 1.1 to 2 by free radical polymerization.

Generally, as free-radical crosslinkable, expandable polymeric compositions are processed for crosslinking purposes, the polymers and the other ingredients are melt processed first and then subjected to a nominal crosslinking profile. The melt processing step occurs at a nominal melt processing temperature. The nominal crosslinking profile has three temperature-related portions: (1) a molding temperature portion; (2) a transitional temperature portion; and (3) a crosslinking temperature portion. Depending on the process, the molding temperature portion may be replaced with an extruding temperature portion.

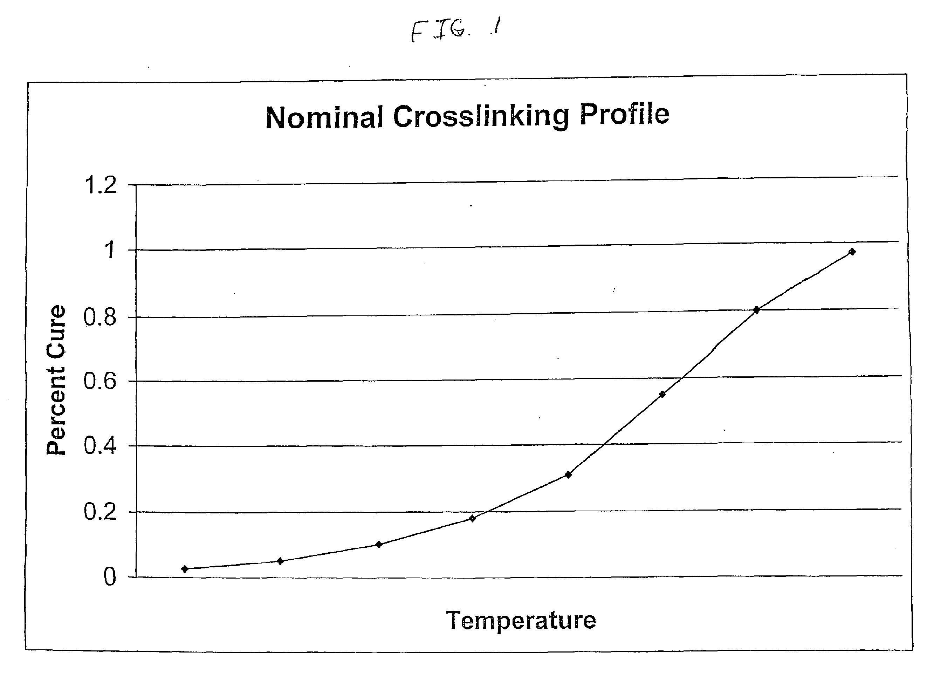

The nominal melt processing temperature and the nominal crosslinking profile are directly related to the polymer and the free-radical inducing species (or the crosslinking agent) selected. Figure 1 illustrates a typical nominal crosslinking profile.

To ensure that only the desired crosslinking reaction occurs, the melt processing temperature and the molding temperature are kept low to avoid premature crosslinking. After the desired level of melt processing has occurred, the crosslinkable, expandable polymeric composition is transferred to the mold or extruder. At the molding temperature, it is desirable to allow the crosslinkable, expandable polymeric composition to fill the mold and then further heat the composition without premature crosslinking. Additionally, it is desirable that the crosslinkable, expandable polymeric composition be uniformly heated prior to the onset of crosslinking.

From the molding temperature portion, the crosslinkable, expandable polymeric composition passes through a transitional temperature portion to reach the nominal crosslinking temperature. If the free-radical species is an organic peroxide, the nominal crosslinking temperature is directly dependent upon the decomposition of temperature of the peroxide. Accordingly, the temperature range of the transitional temperature portion is determined by the nominal molding temperature on the low temperature end and by the nominal crosslinking temperature on the high temperature end.

It is important to note that in some applications, the melt processing may occur in a single-step or in more than one-step. For an example and as single step, the components may be added separately to the hopper of an extruder and melt blended together at a suitable melt processing temperature. An example of multi-step melt processing may include a first step wherein the components are blended together at a temperature above the melting temperature of the polymer but below the nominal decomposition temperature of the free-radical inducing species and a second step wherein the blended composition is transferred into an extruder for further processing. As used herein, the melt processing temperature is defined to include single step or multi-step melt processing techniques.

Because the crosslinking rate increases gradually with temperature, the temperature difference (i.e., the transitional temperature portion) between the molding temperature portion (i.e., the initial molten polymer temperature upon introduction into the mold) and the crosslinking temperature portion (i.e., the temperature at which the polymer is preferably crosslinked) can be quite large, typically greater than 60 degrees Celsius for injection-molded articles: For compression-molded articles, the transitional temperature range can exceed 140 degrees Celsius. While the crosslinking temperature changes with the choice of free-radical inducing species, the corresponding temperature range of the transitional temperature portion is generally unaffected. Therefore, a change in the crosslinking temperature (or free-radical inducing species) typically requires a corresponding change in the molding temperature. Similarly, there is typically a corresponding change in the melt processing temperature.

In addition to the crosslinking profile, other factors affect the uniformity of crosslinking, the uniformity of cell size, and the cycle time for crosslinkable, expandable polymeric compositions as the compositions are made into articles of manufacture. Those factors include blowing agent kinetics and the article's geometry (e.g., overall thickness and thickness distribution). Understandably, the complexity of the geometry contributes significantly to the quality and properties of the resulting article.

Accordingly, there is a need for a crosslinkable, expandable polymeric composition that yields a uniformly-crosslinked article of manufacture. Also, there is a need for the resulting article of manufacture to have uniform cell size. There is a need for a crosslinkable, expandable polymeric composition that is processable within suitable cycle times. Significantly, there is a need for a crosslinkable, expandable polymeric composition that yields a uniformly crosslinked article of manufacture with uniform cell size within a suitable cycle time even when the article of manufacture is to have a complex geometry.

Additionally, there is a need for a crosslinkable, expandable polymeric composition using a low temperature free-radical inducing species as a replacement for conventional free-radical inducing species. Specifically, the low temperature free-radical inducing species should have free-radical initiation temperatures lower than the free-radical inducing species conventionally used in the crosslinkable, expandable polymeric composition. More particularly, when the low temperature free-radical inducing species is an organic peroxide, it should have a decomposition temperature lower than organic peroxides conventionally used in the crosslinkable, expandable polymeric composition.

Additionally, it is desirable that the crosslinkable, expandable polymer be useful in an improved process having higher melt processing temperatures than are conventionally used. Moreover, the process should permit molding the crosslinkable, expandable polymer at temperatures higher than conventionally used.

All of these needs should be fulfilled without exceeding the level of premature crosslinking achievable with conventional crosslinkable, expandable polymeric compositions using conventional processes for preparing articles of manufacture. It is also desirable to not exceed the conventional level of premature crosslinking or further minimize the level of premature crosslinking while operating at higher processing temperatures or faster processing conditions.

There is also a need for the temperature range of the transitional temperature portion to be significantly smaller than provided in conventional processes, also without negatively impacting premature crosslinking. A smaller temperature range will yield a faster process because the transitional heating for the crosslinkable, expandable polymeric composition is minimized.

It is also desirable that the transitional temperature portion increase as sharply as possible and approach an infinite slope. Moreover, it is desirable that the crosslinking temperature portion have a slope of as near zero as possible.

Each of these needed improvements should be achievable without significantly modifying the conventional melt processing or crosslinking equipment.

### SUMMARY OF THE INVENTION

The present invention is a crosslinkable, expandable polymeric composition comprising a free-radical crosslinkable polymer, a free-radical inducing species, a crosslinking-profile modifier, and a blowing agent. Preferably, the free-radical inducing species is a low temperature free-radical inducing species.

Additionally, the present invention includes an improved process for prepared a crosslinked, expanded article of manufacture. Examples of suitable processes include injection molding, compression molding, extrusion, and thermoforming processes. A crosslinked, expanded article of manufacture made from the composition or the improved process is also considered part of the present invention.

### BRIEF DESCRIPTION OF DRAWING

Figure 1 shows a nominal crosslinking temperature profile for a combination of a free-radical crosslinkable polymeric compositions and a free-radical inducing species.
Figure 2 shows a cross-sectional view of a shoe sole prepared from a crosslinkable, expandable polymeric composition containing a short-half-life free-radical inducing species representing the present invention.

### DESCRIPTION OF THE INVENTION

"Conventional Free-Radical Inducing Species," as used herein, means, in the absence of a crosslinking profile modifier, a free-radical inducing species selected to minimize premature crosslinking and facilitate reasonable crosslinking cycle times. In addition to other factors, when the conventional free-radical species is an organic peroxide, the selection is based upon the peroxide nominal decomposition temperature and its half-life at various processing/crosslinking temperatures.

"Nominal Decomposition Temperature," as used herein with regard to organic peroxides, means the temperature at which 90% of the peroxide is decomposed in a 12-minute period.

"Melt Induction Time," as used herein, means the amount of time required for the torque value of polymeric composition as measured by a moving die rheometer (MDR) to increase by 0.0045 Nm (0.04 pound-inches) above the minimum torque at a melt processing temperature of the polymeric composition, 100 cycles per minute, and an arc of 0.5 degrees.

At the nominal melt processing temperature, the melt induction time is termed the nominal melt induction time (t_{0.04n-melt}) or the time to the onset of torque increase (tₒₙₛₑₜ). If the melt induction time is a longer period of time at the nominal melt processing temperature, the period of time is termed an improved melt induction time. Also, if the a period of time equivalent to the nominal melt induction time is achievable at a higher melt processing temperature, the period of time is termed an improved melt induction time.

"Mold Induction Time," as used herein, means the amount of time required for the torque value of a polymeric composition as measured by a moving die rheometer (MDR) to increase by 0.0045 Nm (0.04 pound-inches) above the minimum torque at a molding temperature of the polymeric composition, 100 cycles per minute, and an arc of 0.5 degrees.

At the nominal molding temperature, the mold induction time is termed the nominal molding induction time (t_{0.04n-mold}). If the mold induction time is a longer period of time at the nominal molding temperature, the period of time is termed an improved mold induction time. Also, if the a period of time equivalent to the nominal mold induction time is achievable at a higher molding temperature, the period of time is termed an improved mold induction time.

The present invention is crosslinkable, expandable polymeric composition comprising (a) a free-radical crosslinkable polymer, (b) a low temperature free-radical inducing species, (c) a crosslinking-profile modifier, and (d) a blowing agent.

In the absence of the crosslinking-profile modifier, a combination of the free-radical crosslinkable polymer and a conventional free-radical inducing species has a nominal melt processing temperature and achieves a nominal melt induction time at the nominal melt processing temperature. It is noted that the temperature of the melt processing temperature can be raised by increasing the shear energy when extruding equipment is used. Achieving desirable melt induction times when shear energy contributes to the melt processing temperature is within the scope of the present invention.

The combination of the free-radical crosslinkable polymer and the conventional free-radical inducing species also has a nominal crosslinking profile comprising (a) a nominal molding temperature portion, (b) a nominal transitional temperature portion, and (c) a nominal crosslinking temperature portion. The combination achieves a nominal mold induction time at the nominal molding temperature. When the nominal processing conditions are used, the combination is processed at its nominal processing rate.

A variety of free-radical crosslinkable polymers is useful in the present invention. Moreover, many polymers that were heretofore unsuitable for free-radical crosslinking are useful in the present invention. Notably, polymers having a high melting temperature are now suitable for free-radical crosslinking. In particular, the present invention is useful with free-radical crosslinking polymers having a melting temperature equal to or greater than 130 degrees Celsius or a short nominal induction time. For example, the present invention is particularly useful for combinations of a free-radical crosslinkable polymer and a free-radical inducing species that have a nominal induction time of less than 5 minutes or even less than one minute.

Preferably, the free-radical crosslinkable polymer is hydrocarbon-based. Suitable hydrocarbon-based polymers include ethylene/propylene/diene monomers, ethylene/propylene rubbers, ethylene/alpha-olefin copolymers, ethylene homopolymers, propylene homopolymers, ethylene/unsaturated ester copolymers, ethylene/styrene interpolymers, halogenated polyethylenes, propylene copolymers, natural rubber, styrene/butadiene rubber, styrene/butadiene/styrene block copolymers, styrene/ethylene/butadiene/styrene copolymers, polybutadiene rubber, butyl rubber, chloroprene rubber, chlorosulfonated polyethylene rubber, ethylene/diene copolymer, and nitrile rubber, and blends thereof.

With regard to the suitable ethylene polymers, the free-radical crosslinkable polymers generally fall into four main classifications: (1) highly-branched; (2) heterogeneous linear; (3) homogeneously branched linear; and (4) homogeneously branched substantially linear. These polymers can be prepared with Ziegler-Natta catalysts, metallocene or vanadium-based single-site catalysts, or constrained geometry single-site catalysts.

Highly branched ethylene polymers include low density polyethylene (LDPE). Those polymers can be prepared with a free-radical initiator at high temperatures and high pressure. Alternatively, they can be prepared with a coordination-catalyst at high temperatures and relatively low pressures. These polymers have a density between 0.910 grams per cubic centimeter and 0.940 grams per cubic centimeter as measured by ASTM D-792.

Heterogeneous linear ethylene polymers include linear low density polyethylene (LLDPE), ultra-low density polyethylene (ULDPE), very low density polyethylene (VLDPE), and high density polyethylene (HDPE). Linear low density ethylene polymers have a density between 0.850 grams per cubic centimeter and 0.940 grams per cubic centimeter and a melt index between 0.01 to 100 grams per 10 minutes as measured by ASTM 1238, condition I. Preferably, the melt index is between 0.1 to 50 grams per 10 minutes. Also, preferably, the LLDPE is an interpolymer of ethylene and one or more other alphaolefins having from 3 to 18 carbon atoms, more preferably from 3 to 8 carbon atoms. Preferred comonomers include 1-butene, 4-methyl-1-pentene, 1-hexene, and 1-octene.

Ultra-low density polyethylene and very low density polyethylene are known interchangeably. These polymers have a density between 0.870 grams per cubic centimeter and 0.910 grams per cubic centimeter. High density ethylene polymers are generally homopolymers with a density between 0.941 grams per cubic centimeter and 0.965 grams per cubic centimeter.

Homogeneously branched linear ethylene polymers include homogeneous LLDPE. The uniformly branched/homogeneous polymers are those polymers in which the comonomer is randomly distributed within a given interpolymer molecule and wherein the interpolymer molecules have a similar ethylene/comonomer ratio within that interpolymer.

Homogeneously-branched substantially linear ethylene polymers include (a) homopolymers of C₂-C₂₀ olefins, such as ethylene, propylene, and 4-methyl-1-pentene, (b) interpolymers of ethylene with at least one C₃-C₂₀ alpha-olefin, C₂-C₂₀ acetylenically unsaturated monomer, C₄-C₁₈ diolefin, or combinations of the monomers, and (c) interpolymers of ethylene with at least one of the C₃-C₂₀ alphaolefins, diolefins, or acetylenically unsaturated monomers in combination with other unsaturated monomers. These polymers generally have a density between 0.850 grams per cubic centimeter and 0.970 grams per cubic centimeter. Preferably, the density is between 0.85 grams per cubic centimeter and 0.955 grams per cubic centimeter, more preferably, between 0.850 grams per cubic centimeter and 0.920 grams per cubic centimeter.

Ethylene/styrene interpolymers useful in the present invention include substantially random interpolymers prepared by polymerizing an olefin monomer (i.e., ethylene, propylene, or alpha-olefin monomer) with a vinylidene aromatic monomer, hindered aliphatic vinylidene monomer, or cycloaliphatic vinylidene monomer. Suitable olefin monomers contain from 2 to 20, preferably from 2 to 12, more preferably from 2 to 8 carbon atoms. Preferred such monomers include ethylene, propylene, 1-butene, 4-methyl-1-pentene, 1-hexene, and 1-octene. Most preferred are ethylene and a combination of ethylene with propylene or C₄₋₈ alphaolefins. Optionally, the ethylene/styrene interpolymers polymerization components can also include ethylenically unsaturated monomers such as strained ring olefins. Examples of strained ring olefins include norbornene and C₁₋₁₀ alkyl- or C₆₋₁₀ aryl-substituted norbornenes.

Ethylene/unsaturated ester copolymers useful in the present invention can be prepared by conventional high-pressure techniques. The unsaturated esters can be alkyl acrylates, alkyl methacrylates, or vinyl carboxylates. The alkyl groups can have 1 to 8 carbon atoms and preferably have 1 to 4 carbon atoms. The carboxylate groups can have 2 to 8 carbon atoms and preferably have 2 to 5 carbon atoms. The portion of the copolymer attributed to the ester comonomer can be in the range of 5 to 50 percent by weight based on the weight of the copolymer, and is preferably in the range of 15 to 40 percent by weight. Examples of the acrylates and methacrylates are ethyl acrylate, methyl acrylate, methyl methacrylate, t-butyl acrylate, n-butyl acrylate, n-butyl methacrylate, and 2-ethylhexyl acrylate. Examples of the vinyl carboxylates are vinyl acetate, vinyl propionate, and vinyl butanoate. The melt index of the ethylene/unsaturated ester copolymers can be in the range of 0.5 to 50 grams per 10 minutes.

Halogenated ethylene polymers useful in the present invention include fluorinated, chlorinated, and brominated olefin polymers. The base olefin polymer can be a homopolymer or an interpolymer of olefins having from 2 to 18 carbon atoms. Preferably, the olefin polymer will be an interpolymer of ethylene with propylene or an alpha-olefin monomer having 4 to 8 carbon atoms. Preferred alpha-olefin comonomers include 1-butene, 4-methyl-1-pentene, 1-hexene, and 1-octene. Preferably, the halogenated olefin polymer is a chlorinated polyethylene.

Examples of propylene polymers useful in the present invention include propylene homopolymers and copolymers of propylene with ethylene or another unsaturated comonomer. Copolymers also include terpolymers, tetrapolymers, etc. Typically, the polypropylene copolymers comprise units derived from propylene in an amount of at least 60 weight percent. Preferably, the propylene monomer is at least 70 weight percent of the copolymer, more preferably at least 80 weight percent.

Natural rubbers suitable in the present invention include high molecular weight polymers of isoprene. Preferably, the natural rubber will have a number average degree of polymerization of about 5000 and a broad molecular weight distribution.

Useful styrene/butadiene rubbers include random copolymers of styrene and butadiene. Typically, these rubbers are produced by free radical polymerization. Styrene/butadiene/styrene block copolymers of the present invention are a phase-separated system. The styrene/ethylene/butadiene/styrene copolymers useful in the present invention are prepared from the hydrogenation of styrene/butadiene/styrene copolymers.

The polybutadiene rubber useful in the present invention is preferably a homopolymer of 1,4-butadiene. Preferably, the butyl rubber of the present invention is a copolymer of isobutylene and isoprene. The isoprene is typically used in an amount between 1.0 weight percent and 3.0 weight percent.

For the present invention, polychloroprene rubbers are generally polymers of 2-chloro-1,3-butadine. Preferably, the rubber is produced by an emulsion polymerization. Additionally, the polymerization can occur in the presence of sulfur to incorporate crosslinking in the polymer.

Preferably, the nitrile rubber of the present invention is a random copolymer of butadiene and acrylonitrile.

Other useful free-radical crosslinkable polymers include silicone rubbers and fluorocarbon rubbers. Silicone rubbers include rubbers with a siloxane backbone of the form -Si-O-Si-O-. Fluorocarbon rubbers useful in the present invention include copolymers or terpolymers of vinylidene fluoride with a cure site monomer to permit free-radical crosslinking.

Useful free-radical inducing species include organic peroxides and Azo free radical initiators. Organic peroxides can be added via direct injection. These free-radical inducing species may be used in combination with other free-radical initiators such as bicumene, oxygen, and air. Oxygen-rich environments can also initiate useful free-radicals.

The organic peroxides useful in the present invention have a nominal decomposition temperature lower than the organic peroxide conventionally used in the application. For example, when compared with di(tert-butylperoxyisopropyl)benzene as a conventional organic peroxide, tert-butyl peroxybenzoate is a desirable peroxide for use in the present invention. Notably, di(tert-butylperoxyisopropyl)benzene has a nominal decomposition temperature of 175 degrees Celsius (that is, the temperature at which 90% of the peroxide is decomposed in a 12-minute period) and a half life of 94 minutes at 140 degrees Celsius while tert-butyl peroxybenzoate has a nominal decomposition temperature of 140 degrees Celsius and a half life of 4.4 minutes at 140 degrees Celsius.

Preferably, the free-radical inducing species is present in an amount between 0.1 and 10 phr (parts per hundred parts of rubber by weight), more preferably, between 0.5 and 5.0 phr, and even more preferably, between 1.0 and 4 phr.

Preferably, the fiee-radical inducing species is present in an amount sufficient to achieve a crosslinking density at least as high as achievable in the absence of the crosslinking-profile modifier.

Useful examples of the crosslinking-profile modifier are free radical inhibitors such as (i) hindered amine-derived stable organic free radicals, (ii) iniferters, (iii) organometallic compounds, (iv) aryl azooxy radical, and (v) nitroso compounds. Selection of crosslinking temperature profile modifiers is based upon determining whether the modifier will impart at least a 5-fold greater induction time over the nominal induction time.

Preferably, the crosslinking-temperature profile modifier is present in an amount between 0.01 to 5.0 phr. More preferably, it is present between 0.05 to 3.0 phr, even more preferably, between 0.1 to 3.0 phr.

The crosslinking-profile modifier when added to the combination and the blowing agent can permit the resulting crosslinkable, expandable polymeric composition to achieve an improved melt induction time at the nominal melt processing temperature. The improved melt induction time would be sufficient to permit melt processing of the expandable, crosslinkable polymeric composition prior to the onset of crosslinking. The crosslinking-profile modifier can also permit the resulting crosslinkable, expandable polymeric composition to achieve an improved melt induction time at temperatures higher than the nominal melt processing temperature.

The crosslinking-profile modifier can permit the resulting crosslinkable, expandable polymeric composition to achieve an improved mold induction time at the nominal molding temperature. The improved mold induction time would be sufficient to permit uniform heating of the expandable, crosslinkable polymeric composition prior to the onset of crosslinking.

Preferably, the improved mold induction time is at least 5-fold greater than the nominal mold induction time. More preferably, the improved mold induction time is at least 10-fold greater than the nominal mold induction time. Even more preferably, the improved mold induction time is at least 15-fold greater.

Preferably, the crosslinking-profile modifier permits the resulting crosslinkable, expandable polymeric composition to achieve an improved mold induction time at temperatures higher than the nominal molding temperature. More preferably, the improved mold induction time would be sufficient to permit uniform heating of the expandable, crosslinkable polymeric composition at temperatures higher than the nominal molding temperature. Most preferably, the crosslinking profile modifier permits uniform heating at the crosslinking temperature.

Preferably, the crosslinking profile modifier permits achieving a cure rate at least as fast as achievable in the absence of the crosslinking profile modifier.

Preferably, the invented crosslinkable, expandable polymeric composition can be processed into an article of manufacture at a rate at least 20 percent faster than the conventional composition (the nominal processing rate). More preferably, the rate improvements occur without a detrimental impact on the crosslinking density, the crosslinking uniformity, or the uniformity of cell size in the resulting article of manufacture.

Suitable hindered amine-derived stable organic free radicals include 2,2,6,6,-tetramethyl piperidinyl oxy (TEMPO) and its derivatives. More preferably, hindered amine-derived stable organic free radicals are bis-TEMPOs, oxo-TEMPO, 4-hydroxy-TEMPO, an ester of 4-hydroxy-TEMPO, polymer-bound TEMPO, PROXYL, DOXYL, di-tertiary butyl N oxyl, dimethyl diphenylpyrrolidine-1-oxyl, 4 phosphonoxy TEMPO, or a metal complex with TEMPO. Even more preferably, hindered amine-derived stable organic free radical is a bis-TEMPO or 4-hydroxy-TEMPO. An example of a bis-TEMPO is bis(1-oxyl-2,2,6,6-tetramethylpiperidine-4-yl)sebacate.

Iniferters are compounds capable of initiating and terminating free radical reactions. They are also capable of reversibly terminating growing polymer chains. When the crosslinking-temperature profile modifier is an iniferter, it is preferably selected from the group consisting of tetraethyl thiuram disulfide, benzyl NN diethyldithiocarbamate, dithiocarbamate, polythiocarbamate, and S benzyl dithiocarbamate.

The crosslinking-temperature profile modifier and the low temperature free-radical inducing species can be combined with the free-radical crosslinkable polymer in a variety of ways, including direct compounding, direct soaking, and direct injection.

The blowing agent can be a chemical or physical blowing agent. Preferably, the blowing agent will be a chemical blowing agent. An example of a useful chemical blowing agent is azodicarbonamide. More preferably, the blowing agent will be a chemical blowing agent, having its activation temperature within the nominal crosslinking temperature profile.

Preferably, when the blowing agent is a chemical blowing agent, it is present in an amount between 0.05 to 6.0 phr. More preferably, it is present between 0.5 to 5.0 phr, even more preferably, between 1.5 to 3.0 phr.

The crosslinkable, expandable polymeric composition can also contain an organic crosslinking modifier not having a double bond, wherein the organic crosslinking modifier and the crosslinking-temperature profile modifier synergistically (a) suppress the crosslinking rate of the free-radical crosslinkable polymer at temperatures less than the nominal cure temperature of the free-radical inducing species and (b) enhance the crosslinking density at the nominal cure temperature of the free-radical inducing species. Preferably, the organic crosslinking modifier is tris(2,4-di-tert-butylphenyl)phosphite,poly[[6-[(1,1,3,3,-tetramethylbutyl)amino]-s-triazine-2,4-diyl][2,2,6,6,-tetramethyl-4-piperidyl)imino]hexamethylene[22,6,6-tetramethyl-4-piperidyl)imino)], 2(2'-hydroxy-3',5'-di-tert-amylphenyl)benzotriazole, or blends thereof.

The crosslinkable, expandable polymeric composition can also contain a nonpolar additive, wherein the additive enhances the crosslinking performance without contributing to the migration of the crosslinking-temperature profile modifier to the surface of an article of manufacture prepared from the crosslinkable polymeric composition. Preferably, the nonpolar additive is decadiene or polybutadiene.

The crosslinkable, expandable polymeric composition can also contain a cure booster or a coagent to enhance the crosslinking performance of the free-radical inducing species, without increasing the free-radical inducing species. Crosslinking performance enhancements can include cure rate and cure degree. The addition of a cure booster is particularly useful when the free-radical crosslinkable polymer is a chlorinated polyethylene. Useful cure boosters include polyvinyl agents and certain monovinyl agents such as alpha methyl styrene dimer, allyl pentaerythritol (or pentaerythritol triacrylate), TAC, TAIC, 4-allyl-2-methoxyphenyl allyl ether, and 1,3-di-isopropenylbenzene. Other useful cure boosters include compounds having the following chemical structures.

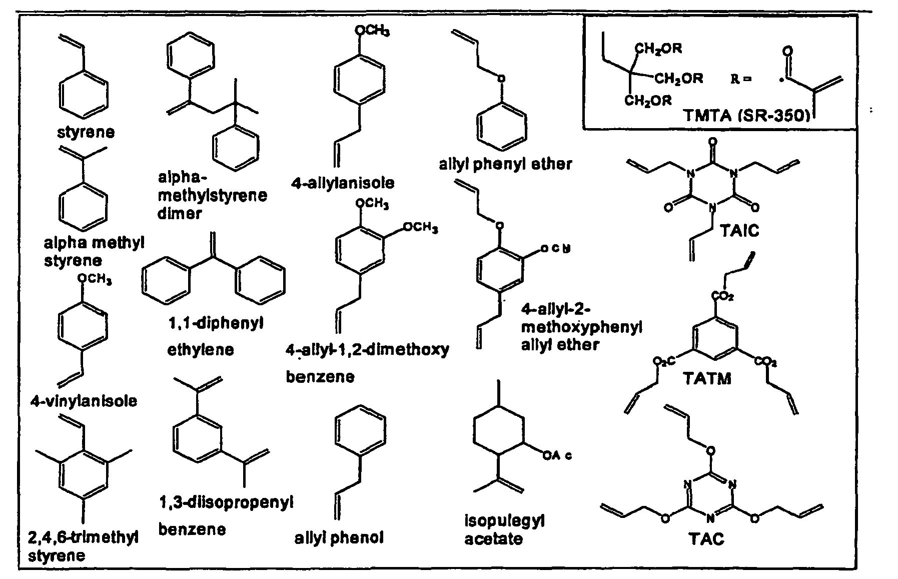

When the crosslinkable, expandable polymeric composition contains a cure booster, the cure booster is preferably present in an amount less than 5.0 phr. More preferably, it is present between 0.1 to 4.0 phr, even more preferably, between 0.2 to 3.0 phr,sufficient to achieve a crosslinking density at least as high as achievable in the absence of the crosslinking profile modifier

The crosslinkable, expandable polymeric composition can also contain catalysts for increasing free-radical formation. Suitable examples of catalysts include tertiary amines, cobalt naphthenate, manganese naphthenate, vanadium pentoxide, and quaternary ammonium salt.

Other additives are useful with the crosslinkable, expandable polymeric composition of the present invention. Those additives include scorch inhibitors, antioxidants, fillers, clays, processing aids, carbon black, flame retardants, peroxides, dispersion agents, waxes, coupling agents, mold release agents, light stabilizers, metal deactivators, plasticizers, antistatic agents, whitening agents, nucleating agents, other polymers, and colorants. The crosslinkable, expandable polymeric compositions can be highly filled.

Other suitable non-halogenated flame retardant additives include alumina trihydrate, magnesium hydroxide, red phosphorus, silica, alumina, titanium oxides, melamine, calcium hexaborate, alumina, carbon nanotubes, wollastonite, mica, silicone polymers, phosphate esters, hindered amine stabilizers, ammonium octamolybdate, intumescent compounds, melamine octamolybdate, frits, hollow glass microspheres, talc, clay, organo-modified clay, zinc borate, antimony trioxide, and expandable graphite. Suitable halogenated flame retardant additives include decabromodiphenyl oxide, decabromodiphenyl ethane, ethylene-bis (tetrabromophthalimide), and dechlorane plus.

In another alternate embodiment, the present invention is a crosslinkable, expandable polymeric composition comprising a free-radical crosslinkable polymer, a short-half-life free-radical inducing species, a crosslinking-profile modifier, and a blowing agent. When activated at a specified temperature, a short-half-life free-radical inducing species has a half-life shorter than that of the free-radical inducing species conventionally used with a combination of the free-radical crosslinkable polymer and the blowing agent as a crosslinkable, expandable polymeric composition. The conventionally-selected free-radical inducing species is selected to minimize premature crosslinking and facilitate reasonable crosslinking cycle times while the short-half-life free-radical inducing species is not selected to avoid premature crosslinking.

Preferably, the short-half-life free-radical inducing species will have a half life at least 20% faster than the conventional free-radical inducing species when they are activated at about the same temperature. More preferably, the short-half-life free-radical inducing species will have a half life at least 30% faster, even more preferably, at least 50% faster.

The crosslinking-profile modifier when added to the free-radical crosslinkable polymer, the short-half-life free-radical inducing species, and the blowing agent can permit the resulting crosslinkable, expandable polymeric composition to achieve an improved melt induction time at the nominal melt processing temperature. The improved melt induction time would be sufficient to permit melt processing of the expandable, crosslinkable polymeric composition prior to the onset of crosslinking.

Preferably, the improved melt induction time is at least 5-fold greater than the nominal melt induction time. More preferably, the improved melt induction time is at least 10-fold greater than the nominal melt induction time. Even more preferably, the improved melt induction time is at least 15-fold greater.

Also preferably, the crosslinking-profile modifier permits the resulting crosslinkable, expandable polymeric composition to achieve an improved melt induction time at temperatures higher than the nominal melt processing temperature.

Also, the crosslinking-profile modifier can permit the resulting crosslinkable, expandable polymeric composition to achieve an improved mold induction time at the nominal molding temperature. The improved mold induction time would be sufficient to permit uniform heating of the expandable, crosslinkable polymeric composition prior to the onset of crosslinking.

Preferably, the improved mold induction time is at least 5-fold greater than the nominal mold induction time. More preferably, the improved mold induction time is at least 10-fold greater than the nominal mold induction time. Even more preferably, the improved mold induction time is at least 15-fold greater.

Preferably, the crosslinking-profile modifier permits the resulting crosslinkable, expandable polymeric composition to achieve an improved mold induction time at temperatures higher than the nominal molding temperature.

The replacement of the conventionally-selected free radical inducing species with the short-half-life free-radical inducing species also permits increasing the rate of crosslinking at about the same crosslinking temperature. Preferably, the invented crosslinkable, expandable polymeric composition can be processed into an article of manufacture at a rate at least 20 percent faster than the conventional composition. More preferably, the invention composition can achieve process rates at least 40 percent faster. Even more preferably, the rate improvements occur without a detrimental impact on the crosslinking density, the crosslinking uniformity, or the uniformity of cell size in the resulting article of manufacture.

In another embodiment, the present invention is an expanded, crosslinked article of manufacture prepared from the invented crosslinkable, expandable polymeric composition, which comprises a free-radical crosslinkable polymer, a low temperature free-radical inducing species, a crosslinking-profile modifier, and a blowing agent. Preferably, the size of the foamed cells is substantially uniform. Also preferably, the crosslinking is substantially uniform.

In another embodiment, the present invention is an expanded, crosslinked article of manufacture prepared from the invented crosslinkable, expandable polymeric composition, which comprises a free-radical crosslinkable polymer, a short-half-life free-radical inducing species, a crosslinking-profile modifier, and a blowing agent. Preferably, the size of the foamed cells is substantially uniform. Also preferably, the crosslinking is substantially uniform.

In another embodiment, the present invention is an improved process for preparing a crosslinked, expanded article of manufacture. The process comprises the steps of (a) melt processing a crosslinkable, expandable polymeric composition, (b) molding the composition into the shape of the article of manufacture, and (c) crosslinking and expanding the composition as a formed article of manufacture. The composition comprises a free-radical crosslinkable polymer, a low temperature free-radical inducing species, a blowing agent, and a crosslinking-profile modifier. The present invention also includes the article of manufacture made from this improved process.

At a comparable half-life, a low temperature free-radical inducing species has nominal decomposition temperature lower than that of the free-radical inducing species conventionally used with a combination of the free-radical crosslinkable polymer and the blowing agent as a crosslinkable, expandable polymeric composition. The conventionally-selected free-radical inducing species is selected to minimize premature crosslinking and facilitate reasonable crosslinking cycle times while low temperature free-radical inducing species are not selected to avoid premature crosslinking.

In the absence of the crosslinking-profile modifier, a combination of the free-radical crosslinkable polymer and the conventionally-selected free-radical inducing species has a nominal melt processing temperature and achieves a nominal melt induction time at the nominal melt processing temperature.

The combination of the free-radical crosslinkable polymer and the conventionally-selected free-radical inducing species also has a nominal crosslinking profile comprising (a) a nominal molding temperature portion, (b) a nominal transitional temperature portion, and (c) a nominal crosslinking temperature portion. The combination achieves a nominal mold induction time at the nominal molding temperature.

The crosslinking-profile modifier when added to the free-radical crosslinkable polymer, the low temperature free-radical inducing species, and the blowing agent can permit the resulting crosslinkable, expandable polymeric composition to achieve an improved melt induction time at the nominal melt processing temperature. The improved melt induction time would be sufficient to permit melt processing of the expandable, crosslinkable polymeric composition prior to the onset of crosslinking.

Preferably, the improved melt induction time is at least 5-fold greater than the nominal melt induction time. More preferably, the improved melt induction time is at least 10-fold greater than the nominal melt induction time. Even more preferably, the improved melt induction time is at least 15-fold greater.

Also preferably, the crosslinking-profile modifier permits the resulting crosslinkable, expandable polymeric composition to achieve an improved melt induction time at temperatures higher than the nominal melt processing temperature. Accordingly, in the improved process, the composition may be melt processed at a temperature higher than the nominal melt processing temperature.

Also, the crosslinking-profile modifier can permit the resulting crosslinkable, expandable polymeric composition to achieve an improved mold induction time at the nominal molding temperature. The improved mold induction time would be sufficient to permit uniform heating of the expandable, crosslinkable polymeric composition prior to the onset of crosslinking.

Preferably, the improved mold induction time is at least 5-fold greater than the nominal mold induction time. More preferably, the improved mold induction time is at least 10-fold greater than the nominal mold induction time. Even more preferably, the improved mold induction time is at least 15-fold greater.

Preferably, the crosslinking-profile modifier permits the resulting crosslinkable, expandable polymeric composition to achieve an improved mold induction time at temperatures higher than the nominal molding temperature. Accordingly, in the improved process, the composition may be molded at a temperature higher than the nominal molding temperature.

The replacement of the conventionally-selected free radical inducing species with the low temperature free-radical inducing species also permits lowering the crosslinking temperature to the lower nominal decomposition temperature. Preferably, the invented crosslinkable, expandable polymeric composition can be processed into an article of manufacture at a rate at least 20 percent faster than the conventional composition. More preferably, the invention composition can achieve process rates at least 40 percent faster. Even more preferably, the rate improvements occur without a detrimental impact on the crosslinking density, the crosslinking uniformity, or the uniformity of cell size in the resulting article of manufacture.

In another embodiment, the present invention is an improved process for preparing a crosslinked, expanded article of manufacture. The process comprises the steps of (a) melt processing a crosslinkable, expandable polymeric composition, (b) molding the composition into the shape of the article of manufacture, and (c) crosslinking and expanding the composition as a formed article of manufacture. The composition comprises a free-radical crosslinkable polymer, a short-half-life free-radical inducing species, a blowing agent, and a crosslinking-profile modifier. The present invention also includes the article of manufacture made from this improved process.

When activated at about the same temperature, a short-half-life free-radical inducing species has a half-life shorter than that of the free-radical inducing species conventionally used with a combination of the free-radical crosslinkable polymer and the blowing agent as a crosslinkable, expandable polymeric composition. The conventionally-selected free-radical inducing species is selected to minimize premature crosslinking and facilitate reasonable crosslinking cycle times while short-half-life free-radical inducing species are not selected to avoid premature crosslinking.

In the absence of the crosslinking-profile modifier, a combination of the free-radical crosslinkable polymer and the conventionally-selected free-radical inducing species has a nominal melt processing temperature and achieves a nominal melt induction time at the nominal melt processing temperature.

The combination of the free-radical crosslinkable polymer and the conventionally-selected free-radical inducing species also has a nominal crosslinking profile comprising (a) a nominal molding temperature portion, (b) a nominal transitional temperature portion, and (c) a nominal crosslinking temperature portion. The combination achieves a nominal mold induction time at the nominal molding temperature.

The crosslinking-profile modifier when added to the free-radical crosslinkable polymer, the short-half-life free-radical inducing species, and the blowing agent can permit the resulting crosslinkable, expandable polymeric composition to achieve an improved melt induction time at the nominal melt processing temperature. The improved melt induction time would be sufficient to permit melt processing of the expandable, crosslinkable polymeric composition prior to the onset of crosslinking.

Preferably, the improved melt induction time is at least 5-fold greater than the nominal melt induction time. More preferably, the improved melt induction time is at least 10-fold greater than the nominal melt induction time. Even more preferably, the improved melt induction time is at least 15-fold greater.

Also preferably, the crosslinking-profile modifier permits the resulting crosslinkable, expandable polymeric composition to achieve an improved melt induction time at temperatures higher than the nominal melt processing temperature. Accordingly, in the improved process, the composition may be melt processed at a temperature higher than the nominal melt processing temperature.

Also, the crosslinking-profile modifier can permit the resulting crosslinkable, expandable polymeric composition to achieve an improved mold induction time at the nominal molding temperature. The improved mold induction time would be sufficient to permit uniform heating of the expandable, crosslinkable polymeric composition prior to the onset of crosslinking.

Preferably, the improved mold induction time is at least 5-fold greater than the nominal mold induction time. More preferably, the improved mold induction time is at least 10-fold greater than the nominal mold induction time. Even more preferably, the improved mold induction time is at least 15-fold greater.

Preferably, the crosslinking-profile modifier permits the resulting crosslinkable, expandable polymeric composition to achieve an improved mold induction time at temperatures higher than the nominal molding temperature. Accordingly, in the improved process, the composition may be molded at a temperature higher than the nominal molding temperature.

The replacement of the conventionally-selected free radical inducing species with the short-half-life free-radical inducing species also permits increasing the rate of crosslinking at about the same crosslinking temperature. Preferably, the invented crosslinkable, expandable polymeric composition can be processed into an article of manufacture at a rate at least 20 percent faster than the conventional composition. More preferably, the invention composition can achieve process rates at least 40 percent faster. Even more preferably, the rate improvements occur without a detrimental impact on the crosslinking density, the crosslinking uniformity, or the uniformity of cell size in the resulting article of manufacture.

Among other applications, the present invention is particularly useful in footwear, automotive, furniture, foam, and upholstery applications. The particularly useful articles of manufacture made from the present invention include shoe soles, multicomponent shoe soles (including polymers of different densities and types), weather stripping, gaskets, profiles, durable goods, run flat tire inserts, construction panels, leisure and sports equipment foams, energy management foams, acoustic management foams, insulation foams, and other foams.

### EXAMPLES

The following non-limiting examples illustrate the invention.

### Test Methods

The following test methods were used to evaluate the non-limiting examples:
(1) Density
   Density was measured according to ASTM D-792. The test specimens were prepared by cutting three 2.1 cm x 2.3 cm specimens from an uncored molded article.
   Next, each sample was conditioned for a minimum of 12 hours before testing, preferably, 7 days or more after production. Conditioning occurred at 23 ± 2 degrees Celsius and humidity of 50 ± 1 %.
   Each specimen was weighed dry. Next, a cup of distilled water was placed on the scale, and the scale was tared. The test specimens were added to the water and weighed again. The density was calculated by dividing the dry weight by the wet weight. The values are reported in grams per cubic centimeter.
(2) Hardness
   Hardness (Asker C) was measured according to ASTM D-2240. Each sample was conditioned for a minimum of 12 hours before testing, preferably, 7 days or more after production. Conditioning occurred at 23 ± 2 degrees Celsius and humidity of 50± 1%.
   The test specimens had a minimum thickness of 6 mm. The tests were performed at the conditioning conditions and a minimum of 12 mm from any edge of the specimens.
   When the specimen was skinned, the measurements were taken with the skin on top of the plate and centered. The hardness scale was measured about 10 seconds after applying the pressure. The average of 5 measurements was reported with the 5 measurements being taken at different positions on the specimen with at least 6 mm distance between each measurement site.
(3) Gel Level
   Gel level (percent gels) was measured according to ASTM D-2765, Procedure A. The solvent was xylene. Each sample was ground such that the particles could pass through a U.S. No. 30 sieve yet not pass through a U.S. No. 60 sieve.
   One gram of the samples was mixed in 1750 ml of xylene. 51 grams of an antioxidant was added to the mixture. The antioxidant used was Cyanox 2246 2,2'-methylenebis(4-methyl-6-tert-butylphenol), commercially available from Cytec Industries Inc.
   The mixture was boiled for 12 hours. The gels were extracted and placed in a vacuum oven at less than 28 in mercury and 150 degrees Celsius for 12 hours. The gels were cooled for 1 hour in a dessicator. The gels were then weighed. The analysis was performed in duplicate.
(4) Expansion Ratio
   In a mold, two points are indicated with a distance of 10 mm apart. After the exemplified material is released from the mold, the distance between the points is immediately measured. After 30 minutes, the same distance between the points is measured again; this value is divided by 10 and reported as the expansion ratio.
(5) Shrinkage
   Shrinkage (percent) was measured according to SATRA standard PM-70. The test specimens were prepared by cutting three 150 mm x 25 mm x 5 mm specimens from an uncored molded article. Shallow cuts were made into specimens at 25 mm from each edge of the 150 mm length.
   Next, each sample was conditioned for a minimum of 12 hours before testing, preferably, 7 days or more after production. Conditioning occurred at 23 ± 2 degrees Celsius and humidity of 50 ± 1%. After at least 3 hours of conditioning, the length between the cuts on the 150 mm length was measured.
   After conditioning, the test specimens were placed in an oven set at 50 ± 2 degrees Celsius for 24 hours or at 70 ± 2 degrees Celsius for 4 hours.
   Next, the specimens were submitted to the conditioning conditions for 30 minutes. The length of the specimens was then measured.
(6) Compression Set
   The compression set (percent) was measured according to ASTM D-3574. The test specimens were prepared by cutting 5 circles having a 2.8 cm diameter and a 9.4 mm thickness from an uncored molded article. Three specimens were analyzed per test.
   Next, each sample was conditioned for a minimum of 12 hours before testing, preferably, 7 days or more after production. Conditioning occurred at 23 ± 2 degrees Celsius and humidity of 50 ± 1 %.
   After conditioning, the test specimens were compressed to 50 ± 1% of their original thickness. Within 15 minutes and with compression applied, the specimens were placed in an oven set at 50 ± 2 degrees Celsius for 6 hours.
   Next, the specimens were submitted to the conditioning conditions for 40 minutes. The thickness of the specimens was then measured.
(7) Split Tear
   Split tear was measured according to SATRA standard TM-65. The test specimens were cut to the dimensions of 25 mm x 75 mm x 5 mm. A cut of 16 mm deep was cut in the center of the specimens.
   Next, each sample was conditioned for a minimum of 12 hours before testing, preferably, 7 days or more after production. Conditioning occurred at 23 ± 2 degrees Celsius and humidity of 50 ± 1%.
   The split speed was set to 100 mm/min. The measurements were reported in kilograms per centimeter.

### The Exemplified Compositions

Four compositions were evaluated. The following components were used to prepare the compositions:
(a) Elvax 460™ ethylene/vinyl acetate copolymer, containing 18 percent vinyl acetate by weight, having a melt index of 2.5 grams per 10 minutes, and commercially available from DuPont;
(b) Perkadox 1440™ di(tert-butylperoxyisopropyl)benzene, having a nominal decomposition temperature (temperature at which 90% of the peroxide is decomposed in a 12-minute period) of 175 degrees Celsius, having a half life of 94 minutes at 140 degrees Celsius, and commercially available from Akzo Nobel Chemicals BV;
(c) Trigonox C/50D™ tert-butyl peroxybenzoate, having a nominal decomposition temperature of 140 degrees Celsius, having a half life of 4.4 minutes at 140 degrees Celsius, and commercially available from Akzo Nobel Chemicals BV;
(d) TAC 70™ triallyl cyanurate, commercially available from Akzo Nobel Chemicals BV;
(e) 4-hydroxy-TEMPO, commercially available from A. H. Marks;
(f) AZO AZ130™ azodicarbonamide, commercially available from Crompton Uniroyal;
(g) zinc oxide;
(h) zinc stearate; and
(i) calcium carbonate.

Each composition contained 100 phr of Elvax 46O™ ethylene/vinyl acetate copolymer, 2.40 phr AZO AZ130™ azodicarbonamide, 2.00 phr zinc oxide, 0.10 phr zinc stearate, and 5.00 phr calcium carbonate. The amounts of the remaining components are shown in Table 1.

**Table 1**

| Component | Comp. Ex. 1 | Comp. Ex. 2 | Ex. 3 | Ex. 4 |
|---|---|---|---|---|
| Perkadox 1440™ | 2.00 | 1.59 | 0.00 | 0.00 |
| Trigonox C/50D™ | 0.00 | 0.00 | 1.48 | 2.08 |
| TAC 70™ | 0.00 | 0.28 | 0.00 | 0.00 |
| 4-hydroxy-TEMPO | 0.00 | 0.25 | 0.12 | 0.17 |

The exemplified formulations evaluated using a casual shoe sole, 8-mm thick mold. The formulations underwent a molding temperature of 106 degrees Celsius and a crosslinking temperature of 180 degrees Celsius.

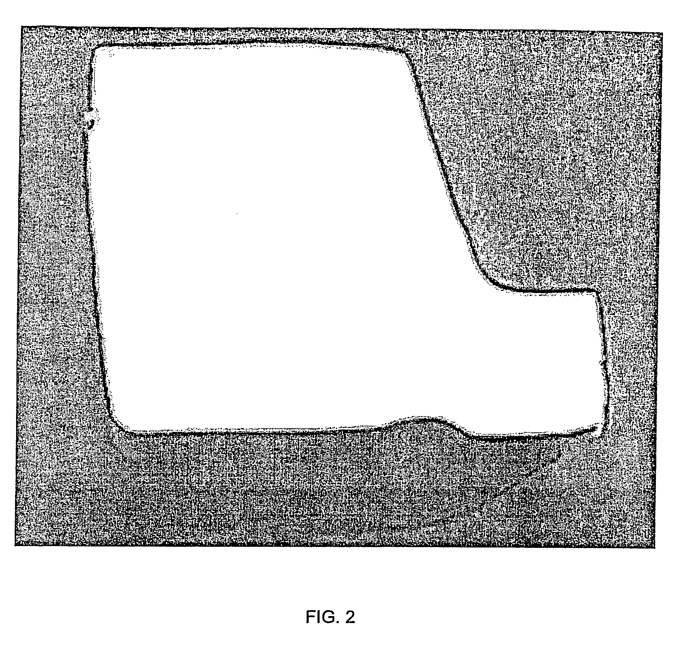

The material exemplified as Comparative Example 1 showed poor cell size control and deformation and a cure time of at least 360 seconds. While, after 300 seconds, the material exemplified as Comparative Example 2 showed poor dimensional stability, it showed gel content comparable to that achieved with Comparative Example 1 after 360 seconds. After 300 seconds, the materials exemplified as Example 3 showed no deformation and good dimensional stability. Figure 2 is representative of a cross-sectional view of a shoe sole prepared from the Example 3 crosslinkable, expandable polymeric composition.

To determine the minimum time required to produce flat and non-deformed articles with Comparative Examples 1 and 2 and Example 3, the compositions were crosslinked at 175 degrees Celsius or 180 degrees Celsius and evaluated after certain time limits. The minimum time to produce (1) flat and non-deformed or (2) convex and deformed shoe soles was determined. Table 2 shows the result of the study.

**Table 2**

| Formulation | Temp. (° C) | Time (sec) | Heel Appearance |
|---|---|---|---|
| Comp. Ex. 1 | 175 | 480 | convex and deformed |
| Comp. Ex. 1 | 175 | 600 | flat and non-deformed |
| Comp. Ex. 2 | 175 | 480 | convex and deformed |
| Comp. Ex. 2 | 175 | 600 | flat and non-deformed |
| Ex. 3 | 175 | 300 | flat and non-deformed |
| Ex. 3 | 180 | 240 | flat and non-deformed |

Several general properties were determined the exemplified formulations. Those properties are reported in Table 3.

**Table 3**

| Form. | Cure Temp. | Cure Time | Density | Hardness (unskinned) | Hardness (skinned) | % Gels | Expansion Ratio | % Shrinkage (50C) | % Shrinkage (70C) | Comp. Set | Split Tear |
|---|---|---|---|---|---|---|---|---|---|---|---|
| C. Ex. 1 | 180 | 300 | 0.227 | 62.4 | 55.4 | 93.84 | 1.6 | 1.78 | 3.25 | 49.76 | 3.028 |
| C. Ex. 2 | 180 | 240 | 0.182 | 54.4 | 46.8 | 90.18 | 1.7 | 0.97 | 0.97 | 62.19 | 3.6 |
| C. Ex. 2 | 180 | 300 | 0.207 | 57.8 | 51.0 | 95.52 | 1.7 | 1.13 | 2.77 | 52.06 | 2.77 |
| Ex. 3 | 180 | 240 | 0.184 | 56.4 | 50.2 | 91.73 | 1.7 | 1.30 | 3.26 | 50.81 | 2.26 |
| Ex. 3 | 180 | 300 | 0.180 | 52.4 | 49.2 | 88.90 | 1.7 | 1.62 | 3.24 | 52.60 | 2.11 |
| Ex. 4 | 180 | 240 | 0.155 | 54.2 | 45.0 | 80.9 | 1.8 | 0.40 | 1.13 | 73.49 | 2.86 |
| Ex. 4 | 180 | 180 | 0.147 | 52.0 | 48.4 | 76.9 | 1.7 | 0.40 | 1.13 | 72.24 | 3.87 |

## Claims

1. A crosslinkable, expandable polymeric composition comprising:
(a) a free-radical crosslinkable polymer;
(b) a low temperature free-radical inducing species, having a nominal decomposition temperature such that a crosslinking profile would have a transitional temperature (i) not greater than 60°C for an injection-molded article or (ii) not greater than 140°C for a compression-molded article;
(c) a crosslinking-profile modifier; and
(d) a blowing agent.

2. The crosslinkable, expandable polymeric composition of Claim 1 wherein the blowing agent is selected from the group consisting of chemical blowing agents and physical blowing agents.

3. The crosslinkable, expandable polymeric composition of Claim 1 wherein the blowing agent is a chemical blowing agent having its activation temperature within the nominal crosslinking temperature profile.

4. The crosslinkable, expandable polymeric composition of Claim 1 wherein the crosslinking profile modifier is present in an amount between 0.01 and 5.0 phr sufficient to permit uniform heating of the crosslinkable, expandable polymeric composition when heated.

5. The crosslinkable, expandable polymeric composition of Claim 1 wherein the crosslinking profile modifier permits achieving a cure rate at least as fast as achievable in the absence of the crosslinking profile modifier.

6. The crosslinkable, expandable polymeric composition of Claim 1 wherein the free-radical inducing species is present in an amount between 0.1 and 10 phr sufficient to achieve a crosslinking density at least as high as achievable in the absence of the crosslinking-profile modifier.

7. The crosslinkable, expandable polymeric composition of Claim 1 further comprising a cure booster being present in an amount less than 5.0 phr sufficient to achieve a crosslinking density at least as high as achievable in the absence of the crosslinking-profile modifier.

8. A crosslinked, expanded article of manufacture comprising the crosslinkable, expandable polymeric composition of Claim 1.

9. The crosslinked, expanded article of manufacture of Claim 8 wherein the size of the foamed cells are uniform.

10. The crosslinked, expanded article of manufacture of Claim 8 wherein the crosslinking is uniform.

11. A process for preparing a crosslinked, expanded article of manufacture comprising the steps of
(i) melt processing a crosslinkable, expandable polymeric composition comprising
(1) a free-radical crosslinkable polymer,
(2) a low temperature free-radical inducing species, having a nominal decomposition temperature such that a crosslinking temperature profile would have a transitional temperature (i) not greater than 60°C for an injection molded article or (ii) not greater than 140°C for a compression-molded article,
(3) a blowing agent, and
(4) a crosslinking-profile modifier;
(ii) molding the crosslinkable, expandable polymeric composition into the shape of the article of manufacture; and
(iii)crosslinking and expanding the crosslinkable, expandable polymeric composition as a formed article of manufacture.

12. The process of Claim 11 wherein the crosslinking profile modifier is present in an amount sufficient to permit uniform heating of the crosslinkable, expandable polymeric composition during the molding step.

13. The process of Claim 11 or 12 for preparing a crosslinked, expanded article of manufacture wherein melt processing occurs at a temperature greater than the nominal melt processing temperature.

14. The process of any of Claims 11 to 13 for preparing a crosslinked expanded article of manufacture wherein molding occurs at a temperature greater than the nominal molding temperature.

15. The process of any of Claims 11 to 14 wherein the process runs at least 20 percent faster than the nominal processing rate.

16. The crosslinked, expanded article of manufacture according to Claim 8 wherein the article is a shoe sole.

17. The crosslinked, expanded article of manufacture according to Claim 16 wherein the article is a multicomponent shoe sole.

## Patentansprüche

1. Vernetzbare, schäumbare polymere Zusammensetzung, die Folgendes umfasst:
(a) ein radikalisches vernetzbares Polymer;
(b) eine bei niedriger Temperatur freie Radikale induzierende Spezies mit einer solchen nominalen Zersetzungstemperatur, dass ein Vernetzungsprofil eine Übergangstemperatur hätte, die (i) nicht größer ist als 60°C für einen spritzgegossenen Gegenstand oder (ii) nicht größer als 140°C für einen formgepressten Gegenstand;
(c) einen Vernetzungsprofilmodifikator; und
(d) ein Treibmittel.

2. Vernetzbare, schäumbare polymere Zusammensetzung nach Anspruch 1, wobei das Treibmittel aus der aus chemischen Treibmitteln und physikalischen Treibmitteln bestehenden Gruppe ausgewählt ist.

3. Vernetzbare, schäumbare polymere Zusammensetzung nach Anspruch 1, wobei das Treibmittel ein chemisches Treibmittel ist, dessen Aktivierungstemperatur innerhalb des nominalen Vernetzungstemparaturprofils liegt.

4. Vernetzbare, schäumbare polymere Zusammensetzung nach Anspruch 1, wobei der Vernetzungsprofilmodifikator in einer Menge zwischen 0,01 und 5,0 phr vorliegt, was ausreicht, um beim Erhitzen eine gleichmäßige Erwärmung der vernetzbaren, schäumbaren polymeren Zusammensetzung zu erlauben.

5. Vernetzbare, schäumbare polymere Zusammensetzung nach Anspruch 1, wobei mit dem Vernetzungsprofilmodifikator eine Härtungsgeschwindigkeit erreicht werden kann, die mindestens fast so schnell ist wie die ohne Vernetzungsprofilmodifikator erreichbare Härtungsgeschwindigkeit.

6. Vernetzbare, schäumbare polymere Zusammensetzung nach Anspruch 1, wobei die freie Radikale induzierende Spezies in einer Menge zwischen 0,1 und 10 phr vorliegt, was ausreicht, um eine Vernetzungsdichte zu erreichen, die mindestens so hoch ist wie die ohne Vernetzungsprofilmodifikator erreichbare Vernetzungsdichte.

7. Vernetzbare, schäumbare polymere Zusammensetzung nach Anspruch 1, die ferner einen Härtungsbeschleuniger umfasst, der in einer Menge kleiner als 5,0 phr vorliegt, was ausreicht, um eine Vernetzungsdichte zu erreichen, die mindestens so hoch ist wie die ohne Vernetzungsprofilmodifikator erreichbare Vernetzungsdichte.

8. Vernetzter, geschäumter Fertigungsgegenstand, der die vernetzbare, schäumbare polymere Zusammensetzung nach Anspruch 1 umfasst.

9. Vernetzter, geschäumter Fertigungsgegenstand nach Anspruch 8, wobei die Größe der geschäumten Zellen gleichmäßig ist.

10. Vernetzter, geschäumter Fertigungsgegenstand nach Anspruch 8, wobei die Vernetzung gleichmäßig ist.

11. Verfahren zur Herstellung eines vernetzten, geschäumten Fertigungsgegenstands, das die folgenden Schritte umfasst:
(i) Schmelzverarbeiten einer vernetzbaren, schäumbaren polymeren Zusammensetzung, die Folgendes umfasst:
(1) ein radikalisches vernetzbares Polymer,
(2) eine bei niedriger Temperatur freie Radikale induzierende Spezies mit einer solchen nominalen Zersetzungstemperatur, dass ein Vernetzungstemperaturprofil eine Übergangstemperatur hätte, die (i) nicht größer ist als 60°C für einen spritzgegossenen Gegenstand oder (ii) nicht größer als 140°C für einen formgepressten Gegenstand;
(3) ein Treibmittel, und
(4) einen Vernetzungsprofilmodifikator;
(ii) Formen der vernetzbaren, schäumbaren polymeren Zusammensetzung zu der Form des Fertigungsgegenstands; und
(iii) Vernetzen und Aufschäumen der vernetzbaren, schäumbaren polymeren Zusammensetzung als geformten Fertigungsgegenstand.

12. Verfahren nach Anspruch 11, wobei der Vernetzungsprofilmodifikator in einer ausreichenden Menge vorliegt, um die gleichmäßige Erwärmung der vernetzbaren, schäumbaren polymeren Zusammensetzung während des Formungsschrittes zu erlauben.

13. Verfahren nach Anspruch 11 oder 12 zur Herstellung eines vernetzten, geschäumten Fertigungsgegenstands, wobei die Schmelzverarbeitung bei einer Temperatur erfolgt, die höher ist als die nominale Schmelzverarbeitungstemperatur.

14. Verfahren nach einem der Ansprüche 11 bis 13 zur Herstellung eines vernetzten, geschäumten Fertigungsgegenstands, wobei das Formen bei einer Temperatur erfolgt, die höher ist als die nominale Formungstemperatur.

15. Verfahren nach einem der Ansprüche 11 bis 14, wobei das Verfahren mindestens 20 Prozent schneller läuft als die nominale Verarbeitungsgeschwindigkeit.

16. Vernetzer, geschäumter Fertigungsgegenstand nach Anspruch 8, wobei der Gegenstand eine Schuhsohle ist.

17. Vernetzter, geschäumter Fertigungsgegenstand nach Anspruch 16, wobei der Gegenstand eine Mehrkomponenten-Schuhsohle ist.

## Revendications

1. Composition de polymère, expansible et réticulable, comprenant:
a) un polymère qu'on peut faire réticuler à l'aide de radicaux libres ;
b) une espèce qui induit la formation de radicaux libres à basse température, dont la température nominale de décomposition est telle que le profil de réticulation présente une température de transition qui ne dépasse pas
i) 60 °C pour un article moulé par injection,
ii) ou 140 °C pour un article moulé par compression ;
c) un agent de modification de profil de réticulation ;
d) et un agent d'expansion.

2. Composition de polymère, expansible et réticulable, conforme à la revendication 1, dans laquelle l'agent d'expansion est choisi dans l'ensemble constitué par les agents d'expansion chimiques et les agents d'expansion physiques.

3. Composition de polymère, expansible et réticulable, conforme à la revendication 1, dans laquelle l'agent d'expansion est un agent d'expansion chimique dont la température d'activation se situe dans le profil nominal de température de réticulation.

4. Composition de polymère, expansible et réticulable, conforme à la revendication 1, dans laquelle l'agent de modification de profil de réticulation se trouve en une proportion de 0,01 à 5,0 pcc (parties pour 100 parties de caoutchouc, en poids), suffisante pour permettre de réaliser, quand on chauffe la composition de polymère expansible et réticulable, un chauffage uniforme de celle-ci.

5. Composition de polymère, expansible et réticulable, conforme à la revendication 1, dans laquelle l'agent de modification de profil de réticulation permet d'effectuer le durcissement à une vitesse au moins aussi grande que celle qu'on peut atteindre en l'absence de cet agent de modification de profil de réticulation.

6. Composition de polymère, expansible et réticulable, conforme à la revendication 1, dans laquelle l'espèce induisant la formation de radicaux libres se trouve en une proportion de 0,1 à 10 pcc, suffisante pour qu'on puisse atteindre une densité de réticulation au moins aussi élevée que celle qu'on peut atteindre en l'absence de l'agent de modification de profil de réticulation.

7. Composition de polymère, expansible et réticulable, conforme à la revendication 1, qui comprend en outre un accélérateur de durcissement, lequel se trouve en une proportion inférieure à 5,0 pcc, suffisante pour qu'on puisse atteindre une densité de réticulation au moins aussi élevée que celle qu'on peut atteindre en l'absence de l'agent de modification de profil de réticulation.

8. Article de manufacture, expansé et réticulé, comprenant une composition de polymère, expansible et réticulable, conforme à la revendication 1.

9. Article de manufacture, expansé et réticulé, conforme à la revendication 8, dans laquelle la taille des cellules de mousse est uniforme.

10. Article de manufacture, expansé et réticulé, conforme à la revendication 8, dans laquelle la réticulation est uniforme.

11. Procédé de fabrication d'un article de manufacture, expansé et réticulé, comportant les étapes suivantes :
I) traiter à l'état fondu une composition de polymère, expansible et réticulable, comprenant :
1) un polymère qu'on peut faire réticuler à l'aide de radicaux libres,
2) une espèce qui induit la formation de radicaux libres à basse température, dont la température nominale de décomposition est telle que le profil de réticulation présente une température de transition qui ne dépasse pas
i) 60 °C pour un article moulé par injection,
ii) ou 140 °C pour un article moulé par compression,
3) un agent de modification de profil de réticulation,
4) et un agent d'expansion ;
II) mouler la composition de polymère expansible et réticulable, pour la façonner en lui donnant la forme de l'article de manufacture ;
III) et réticuler et expanser la composition de polymère expansible et réticulable qui a pris la forme de l'article de manufacture.

12. Procédé conforme à la revendication 11, dans lequel l'agent de modification de profil de réticulation est utilisé en une quantité suffisante pour permettre de réaliser, au cours de l'étape de moulage, un chauffage uniforme de la composition de polymère expansible et réticulable.

13. Procédé, conforme à la revendication 11 ou 12, de fabrication d'un article de manufacture, expansé et réticulé, dans lequel le traitement à l'état fondu est effectué à une température supérieure à la température nominale de traitement à l'état fondu.

14. Procédé, conforme à l'une des revendications 11 à 13, de fabrication d'un article de manufacture, expansé et réticulé, dans lequel le moulage est effectué à une température supérieure à la température nominale de moulage.

15. Procédé, conforme à l'une des revendications 11 à 14, lequel procédé se déroule à une vitesse supérieure d'au moins 20 % à la vitesse nominale du procédé.

16. Article de manufacture, expansé et réticulé, conforme à la revendication 8, lequel article est une semelle de chaussure.

17. Article de manufacture, expansé et réticulé, conforme à la revendication 8, lequel article est une semelle de chaussure multicomposant.
